# EUROPEAN PATENT APPLICATION

(11) **EP 4 518 541 A1**
(43) Date of publication of application: **05.03.2025**
(21) Application number: 22940196.3
(22) Date of filing: 27.04.2022
(51) Int. Cl.: H04W 72/54

(54) **BASE STATION AND WIRELESS COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/019207
(87) International publication number: WO 2023/209919

(57) **Abstract**

Provided according to one aspect of the present disclosure is a base station comprising: a transmission unit that transmits a measurement request for cross link interference measurement; and a control unit that measures a reference channel in accordance with cross link interference measurement setting received in response to the measurement request.

## Description

### Technical Field

The present disclosure relates to a base station and a wireless communication method.

### Background Art

In Universal Mobile Telecommunications System (UMTS) networks, Long Term Evolution (LTE) has been standardized for the purpose of a higher data rate, low latency and the like. Also, LTE-Advanced (3GPP (Third Generation Partnership Project) Release (Rel.) 10-14) has been standardized for the purpose of a larger capacity, advancement and the like of the LTE (3GPP Rel. 8 and 9).

Successor systems of the LTE (referred to as 5^{th} generation mobile communication system (5G), 5G+ (plus), 6^{th} generation mobile communication system (6G), New Radio (NR), 3GPP Rel. 15 and after or the like, for example) are being also discussed.

### Citation List

### Non-Patent Literature

NPL 1
"Initial Views on Release 18 NR" RP-210293, 3GPP TSG RAN Meeting #91-e Electronic Meeting, March 16 -26, 2021

### Summary of Invention

In a future radio communication system (for example, the NR), it is envisaged that multiple user terminals (User Equipments (UEs)) communicate under environments of ultra-high densities and high traffics.

In such environments, shortage of uplink (UL) resources compared to downlink (DL) resources is envisaged.

In previous NR specifications, however, methods for increasing the uplink resources have not been sufficiently discussed. If the methods cannot be controlled properly, there is a risk that system performance such as increases in latency and reduction in coverage performance may be reduced.

Thus, one objective of the present disclosure is to provide a terminal, a base station and a wireless communication method for enhancement of use efficiency of resources.

According to one aspect of the present disclosure, there is provided a base station including a transmitter that transmits a measurement request for cross link interference measurement, and a controller that measures a reference channel in accordance with the cross link interference measurement configuration received in response to the measurement request.

According to another aspect of the present disclosure, there is provided a base station including a transmitter that transmits at least one of time domain information, frequency domain information and spatial domain information for an XDD (Cross Division Duplex) operation for a cell of the base station, and receiving at least one of time domain information, frequency domain information and spatial domain information for an XDD operation for cells of other base stations.

### Brief Description of Drawings

FIG. 1 is a block diagram for illustrating a functional arrangement of a base station (gNB) according to one embodiment of the present disclosure;
FIG. 2 is a block diagram for illustrating a functional arrangement of a terminal (UE) according to one embodiment of the present disclosure;
FIGS. 3A and 3B each illustrate an exemplary arrangement of radio resources in XDD (Cross Division Duplex) according to one embodiment of the present disclosure;
FIG. 4 is a diagram for illustrating an XDD operation according to one embodiment of the present disclosure;
FIGS. 5A to 5E each illustrate a pure time unit and an XDD time unit according to one embodiment of the present disclosure;
FIG. 6 is a diagram for illustrating a cross link interference (CLI) according to one embodiment of the present disclosure;
FIG. 7 is a diagram for illustrating inter-gNB interference according to one embodiment of the present disclosure;
FIG. 8 is a diagram for illustrating CLI measurement according to one embodiment of the present disclosure;

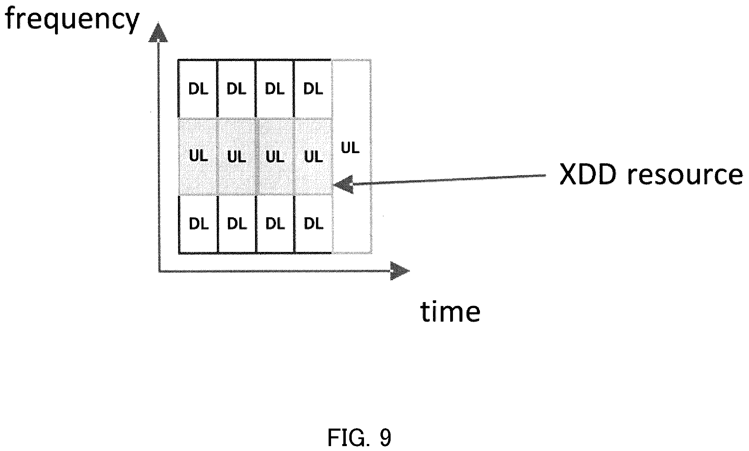

FIG. 9 is a diagram for illustrating XDD resources according to one embodiment of the present disclosure;
FIG. 10 is a diagram for illustrating inter-gNB interference according to one embodiment of the present disclosure;
FIG. 11 is a block diagram for illustrating a hardware arrangement of a base station and a terminal according to one embodiment of the present disclosure; and
FIG. 12 is a block diagram for illustrating a hardware arrangement of a vehicle according to one embodiment of the present disclosure.

### Description of Embodiments

Embodiments of the present disclosure are described below with reference to the drawings.

### (Radio communication system)

In the following, an architecture of a radio communication system according to one embodiment of the present disclosure is described. In this radio communication system, communication is conducted using any or combinations of radio communication methods according to the above embodiments of the present disclosure. The radio communication system may be a system that implements communication using a Long Term Evolution (LTE), a 5^{th} generation mobile communication system New Radio (5G NR), a subsequent radio communication system thereof or the like.

Also, the radio communication system may support dual connectivity among multiple Radio Access Technologies (RATs) (Multi-RAT Dual Connectivity (MR-DC)). The MR-DC may include dual connectivity (E-UTRA-NR Dual Connectivity (EN-DC)) for the LTE (Evolved Universal Terrestrial Radio Access (E-UTRA)) and the NR, dual connectivity for the NR and the LTE (NR-E-UTRA Dual Connectivity (NE-DC)) or the like.

In the EN-DC, a base station (eNB) in the LTE (E-UTRA) is a master node (MN), and a base station (gNB) in the NR is a secondary node (SN). In the NE-DC, a base station (gNB) in the NR is a master node, and a base station (eNB) in the LTE (E-UTRA) is a SN.

The radio communication system may support dual connectivity among multiple base stations within the same RAT (for example, dual connectivity where both the MN and the SN are base stations (gNBs) in the NR (NR-NR Dual Connectivity (NN-DC)).

The radio communication system may include a base station forming a macro cell C1 having a wider coverage and a base station disposed in the macro cell C1 and forming a smaller cell C2 than the macro cell C1. A terminal (UE) may be located within at least one cell. The location, number or the like of respective cells and terminals are not limited to a certain aspect.

A terminal may be connected to at least one of the multiple base stations. The terminal may use at least one of carrier aggregation (CA) using multiple component carriers (CCs) and the dual connectivity (DC).

Each CC may be included in at least one of a first frequency band (Frequency Range 1 (FR1) and a second frequency band (Frequency Range 2 (FR2)). The macro cell C1 may be included in the FR1, and the small cell C2 may be included in the FR2. For example, the FR1 may be a frequency band below 6 GHz (sub-6GHz), and the FR2 may be a frequency band above 24 GHz (above-24GHz). Note that the frequency bands, definitions or the like of the FR1 and FR2 are not limited to them, and the FR1 may correspond to a frequency band higher than the FR2, for example.

Also, the terminal may communicate in the respective CCs using at least one of Time Division Duplex (TDD) and Frequency Division Duplex (FDD).

The multiple base stations may be connected in a wired (for example, an optical fiber confirming to Common Public Radio Interface (CPRI), an X2 interface or the like) or wireless (for example, NR communication) manner. For example, the NR communication is used as a backhaul between two base stations, the base station corresponding to an upper station may be referred to as an Integrated Access Backhaul (IAB) donner, and the base station corresponding to a relay station may be referred to as an IAB node.

The base station may be connected via other base stations or to a core network directly. The core network may include at least one of an Evolved Packet Core (EPC), a 5G Core Network (5GCN), a Next Generation Core (NGC) or the like.

The terminal may support at least one of the LTE, the LTE-A, the 5G, the 6G and others.

In the radio communication system, an Orthogonal Frequency Division Multiplexing (OFDM) based radio access scheme may be used. For example, Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA) or the like may be used in at least one of downlink (DL) and uplink (UL).

The radio access scheme may be referred to as waveform. Note that other radio access schemes (for example, other single carrier transmission schemes, other multi-carrier transmission schemes or the like) may be used for UL and DL radio access schemes in the radio communication system.

In the radio communication system, a downlink shared channel (Physical Downlink Shared Channel (PDSCG)), a broadcast channel (Physical Broadcast Channel (PBCH)), a downlink control channel (Physical Downlink Control Channel (PDCCH)) and other shared among terminals may be used as downlink channels.

Also, in the radio communication system, an uplink shared channel (Physical Uplink Shared Channel (PUSCH)), an uplink control channel (Physical Uplink Control Channel (PUCCH)), a random access channel (Physical Random Access Channel (PRACH)) and others shared among terminals may be used as uplink channels.

User data, upper layer control information, a System Information Block (SIB) and others are transmitted in the PDSCH. User data, upper layer control information and others may be transmitted in the PUSCH. Also, a Master Information Block (MIB) may be transmitted in the PBCH.

Lower layer control information may be transmitted in the PDCCH. The lower layer control information may include downlink control information (DCI) including scheduling information for at least one of the PDSCH and the PUSCH, for example.

Note that the DCI for scheduling the PDSCH may be referred to as a DL assignment, DL DCI or the like, and the DCI for scheduling the PUSCH may be referred to as an UL grant, UL DCI or the like. Note that the PDSCH may be interchangeably referred to as DL data, and the PUSCH may be interchangeably referred to as UL data.

A control resource set (CORESET) and a search space may be used to detect the PDCCH. The CORESET corresponds to a resource for searching for the DCI. The search space corresponds to a search area and a search method for a PDCCH candidate. One CORESET may be associated with one or more search spaces. A UE may monitor for the CORESET associated with a certain search space based on a search space configuration.

One search space may correspond to a PDCCH candidate relevant to one or more aggregation levels. One or more search spaces may be referred to as a search space (SS) set. Note that "search space", "search space set", "search space configuration", "search space set configuration", "CORESET", "CORESET configuration" or the like of the present disclosure may be interchangeably referred to as each other.

Uplink control information (UCI) including at least one of channel state information (CSI), acknowledgement information (referred to as Hybrid Automatic Repeat request ACKnowledgement (HARQ-ACK), ACK/NACK or the like, for example) and a scheduling request (SR) may be transmitted in the PUCCH. A random access preamble for connection establishment to a cell may be transmitted in the PRACH.

Note that various channels may be represented without adding the wording "Physical" at the header

In the radio communication system, a synchronization signal (SS), a downlink reference signal (DL-RS) and others may be transmitted. In the radio communication system, a cell-specific reference signal CRS), a channel state information reference signal (CSIU-RS), a demodulation reference signal (DMRS), a positioning reference signal (PRS), a phase tracking reference signal (PTRS) and others may be transmitted as the DL-RS.

For example, the synchronization signal may be at least one of a primary synchronization signal (PSS) and a secondary synchronization signal (SSS). A signal block including the SS (the PSS and the SSS) and the PBCH (and the DMRS for the PBCH) may be referred to as a SS/PBCH block, a SS block (SSB) or the like. Note that the SS, the SSB or the like may be also referred to as a reference signal.

Also, in the radio communication system, a sounding reference signal (SRS), a demodulation reference signal (DMRS) and others may be transmitted as an uplink reference signal (UL-RS). Note that the DMRS may be referred to as a UE-specific reference signal.

### (Device Arrangement)

Next, exemplary functional arrangements of a base station (gNB) and a terminal (UE) 200 that perform processes and operations as stated below are described. The gNB 100 and the UE 200 include functionalities for implementing the embodiments as stated below. Note that each of the gNB 100 and the UE 200 may include only a portion of the functionalities of the embodiments.

### (gNB 100)

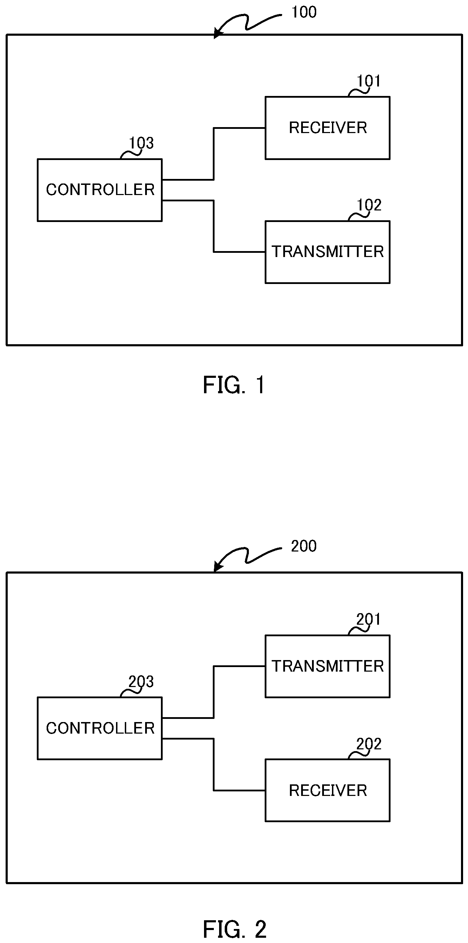

FIG. 1 is a diagram for one exemplary functional arrangement of the gNB 100. As illustrated in FIG. 1, the gNB 100 includes a receiver 101, a transmitter 102 and a controller 103. The functional arrangement as illustrated in FIG. 1 is merely one example. If operations associated with embodiments of the present invention can be practiced, separation of functionalities and names of the functional units are arbitrary.

The receiver 101 include a functionality of receiving various signals transmitted from the UE 200 and acquiring upper layer information from the received information, for example. The transmitter 102 includes a functionality of generating signals for transmission to the UE 200 and transmitting the signals in a wired or wireless manner.

The controller 103 stores preset configuration information and various configuration information for transmission to the UE 200 in a memory device and reads them from the memory device if necessary. Also, the controller 103 performs operations associated with communication with the UE 200. The functional unit regarding signal transmission at the controller 103 may be included in the transmitter 102, and the functional unit regarding signal reception at the controller 103 may be included in the receiver 101.

### (UE 200)

FIG. 2 is a diagram for illustrating one exemplary functional arrangement of the UE 200. The UE 200 includes a transmitter 201, a receiver 202 and a controller 203. The functional arrangement as illustrated in FIG. 2 is merely one example. If operations associated with embodiments of the present invention can be practiced, separation of functionalities and names of the functional units are arbitrary.

The transmitter 201 generates a transmission signal from transmission data and transmits the transmission signal in a wireless manner. The receiver 202 receives various signals wirelessly and acquires upper layer signals from the received physical layer signals. Also, the receiver 202 has a functionality of receiving a NR-PSS, a NR-SSS, a NR-PBCH, a DL/UL control signal a reference signal or the like transmitted from the gNB 100.

The controller 203 stores various configuration information received at the receiver 202 from the gNB 100 in a memory device and reads them from the memory device if necessary. Also, the controller 203 performs operations associated with communication with the gNB 100. The functional unit regarding signal transmission at the controller 203 may be included in the transmitter 201, and the functional unit regarding signal reception at the controller 203 may be included in the receiver 202.

### (XDD operation)

Taking into account a time ratio of transmission and reception (for example, DL:UL = 4:1) in time division duplex (TDD) until Rel. 16, some cases of transmission occasions of UL signals/channels being smaller than reception occasions of DL signals/channels may be considered. In these cases, the UE cannot transmit UL signals/channels frequently, and transmission delay of important UL signals/channels may arise. Also, since the UL transmission occasions are smaller than the DL reception occasions, signals/channels may be congested in the UL transmission occasions. In addition, since the UL signals/channels can be transmitted in a limited amount of time resources in the TDD, UL coverage enhancement technique with repetition may be also limitedly applied.

For future radio communication systems (for example, Rel. 17/18 and subsequent ones), it is discussed that a division duplex scheme where the TDD and frequency division duplex (FDD) are combined for UL and DL will be introduced.

The division duplex scheme may be referred to as XDD (Cross Division Duplex) or subband non-overlapping full duplex. The XDD or the subband non-overlapping full duplex may mean a duplex scheme where DL and UL are duplexed in a frequency division manner in one component carrier (CC) in a TDD band (the DL and the UL are simultaneously available).

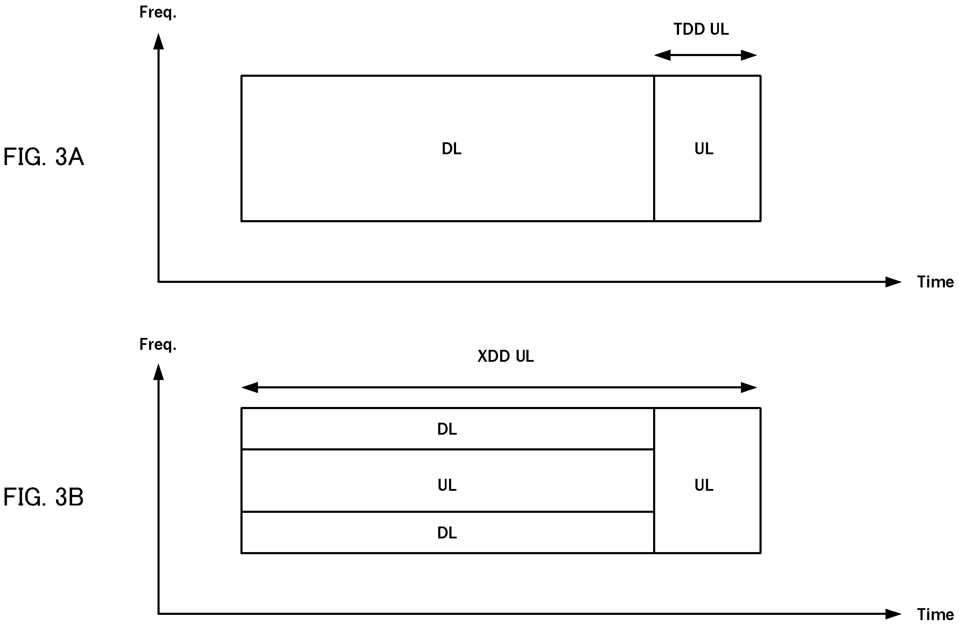

FIG. 3A is a diagram for illustrating one exemplary TDD configuration provided until Rel. 16. In the example as illustrated in FIG. 3A, a TDD slot or symbol is configured for the UE in a bandwidth such as one component carrier (CC) (which may be referred to as a cell or a serving cell) or a bandwidth part (BWP).

In the example as illustrated in FIG. 3A, the time ratio of DL slots and UL slots is 4:1. In such a conventional slot or symbol configuration in the TDD, a sufficient amount of UL time resources cannot be reserved, which may lead to UL transmission delay and reduce coverage performance.

FIG. 3B is a diagram for illustrating one exemplary XDD configuration. In the example as illustrated in FIG. 3B, there is an overlap in time between resources used for DL reception and resources used for UL transmission in one component carrier (CC). According to such a resource configuration, a larger amount of UL resources can be reserved, which can improve utilization efficiency of the resources.

For example, as illustrated in FIG. 3B, both ends in a frequency area may be configured for DL resources, and UL resources may be configured to be sandwiched between these DL resources. As a result, occurrence of cross link interference (CLI) with adjacent carriers can be avoided and reduced. Also, a guard area may be configured at the boundary between the DL resources and the UL resources.

Taking operational complexity of self-interference into account, it may be considered that only base stations use DL resources and UL resources simultaneously. In other words, for radio resources where DL and UL overlap temporally, a certain UE may use a DL resources, and another UE may use an UL resource.

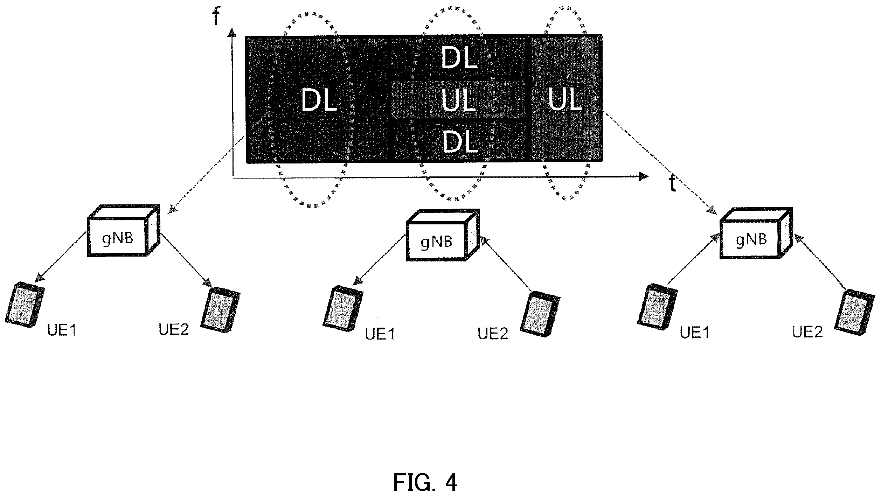

FIG. 4 is a diagram for illustrating one exemplary XDD operation. In the example as illustrated in FIG. 4, a portion of DL resources in a TDD band is configured for UL resources, and the DL and the UL are arranged to partially overlap with respect to the temporal domain.

In the example as illustrated in FIG. 4, each of multiple UEs (UE#1 and UE#2 in FIG. 4) receives a DL channel/signal in a DL exclusive period.

Also, in period where there is temporal overlapping between DL and UL, a certain UE (UE#1 in the example of FIG. 4) receives a DL channel/signal, and another UE (UE#2 in the example of FIG. 4) transmits an UL channel/signal. A base station performs simultaneous transmission and reception of DL and UL in this period.

Also, each of multiple UEs (UE# 1 and UE#2 in FIG. 4) transmits an UL channel/signal in an UL exclusive period.

In the existing NR (defined until Rel. 15/16, for example), each of a DL frequency resource and an UL frequency resource in a carrier for UEs is configured as a DL BWP and an UL BWP. A mechanism for configuration for multiple BWPs and BWP adaptation is needed to switch the DL/UL frequency resource into another DL/UL frequency resource.

Also, in the existing NR, a time resource in a TDD carrier for UEs is configured as at least one of DL, UL and flexible (FR) in the TDD configuration.

An XDD symbol may be a symbol that is indicated or configured as UL (or DL) or is indicated or configured for UL transmission (or DL reception) in certain frequency resources, whereas the XDD symbol may be a symbol that is indicated or configured as DL (or UL) or is indicated or configured for DL reception (or UL transmission) in other frequency resources. Alternatively, an XDD symbol may be a symbol that is indicated or configured as UL (or DL) or is indicated or configured for UL transmission (or DL reception) in a portion of certain frequency resources, whereas the XDD symbol may be a symbol that is indicated or configured as DL (or UL) or is indicated or configured for DL reception (or UL transmission) in a portion of other frequency resources.

A time unit herein may be a symbol level, a slot/subslot level, or a group of symbols/slots/subslots. Namely, an XDD time unit may be an XDD symbol, a slot/subslot including or overlapping with the XDD symbol, or a group of symbols/slots/subslots including or overlapping with the XDD symbol.

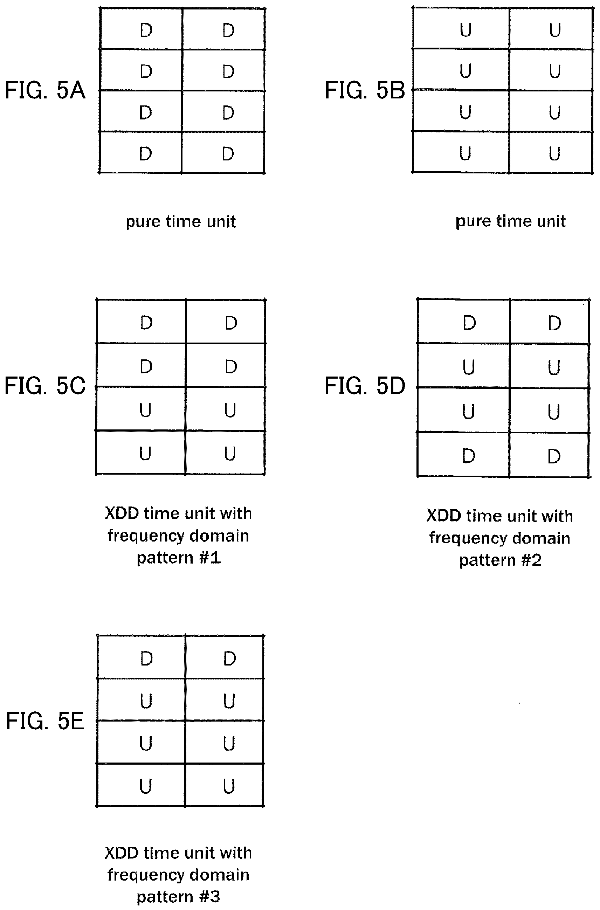

A pure time unit may be a non-XDD symbol (that is, a symbol that is not an XDD symbol), a slot/subslot including or overlapping with no XDD symbol, or a group of symbols/slots/subslots including or overlapping with no XDD symbol, and may be referred to as a non XDD time unit. For example, the pure time unit may be referred to as a time unit consisting of only DL in a frequency resource as illustrated in FIG. 5A or may be referred to as a time unit consisting of only UL in the frequency resource as illustrated in FIG. 5B.

Also, DL resources and UL resources may have various arrangement patterns in a frequency domain with respect to the XDD time unit. For example, the XDD time unit for frequency domain pattern #1 may have an arrangement pattern as illustrated in FIG. 5C. Also, the XDD time unit for frequency domain pattern #2 may have an arrangement pattern as illustrated in FIG. 5D. Also, the XDD time unit for frequency domain pattern #3 may have an arrangement pattern as illustrated in FIG. 5E. These arrangement patterns are merely illustrative, and the XDD time unit may have other arrangement patterns. The frequency domain pattern in the XDD time unit may mean a resource repetition pattern in the frequency domain for the XDD time unit.

### (Cross Link Interference)

A solution for managing cross link interference between base stations and cross link interference between UEs is needed for introduction of the XDD operation into an NR duplex operation. Also, intra-subband CLI and inter-subband CLI must be considered in cases of subband non-overlapping full duplex.

A Sounding Reference Signal Reference Signal Received Power (SRS-RSRP) is defined as a linear average of power contribution of resource elements for carrying a sounding reference signal (SRS). The SRS-RSRP is measured for resource elements configured within a measurement frequency bandwidth in a measurement time occasion.

In an SRS-ResourceConfigCLI configuration, information elements (IEs) such as an SRS resource (srs-Resource), a subcarrier spacing (srs-SCS), a serving cell index (refServCellindex), a BWP ID (refBWP) and the like are configured.

A Cross Link Interference Received Signal Strength Indicator (CLI-RSSI) in Rel-16 is defined as a linear average of total receive power observed in only OFDM symbols configured in measurement time resources configured in a measurement bandwidth configured from all sources including a co-channel serving and non-serving cell, adjacent channel interference, heat noise and the like.

In an RSSI-ResourceConfigCLI configuration in Rel-16, information elements (IEs) such as an RSSI resource ID (rssi-ResourceId), a subcarrier spacing (rssi-SCS), a start PRB (Physical Resource Block) (startPRB), a lowed size of a measurement bandwidth (nrofPRBs), a start position for measurement (startPosition), the number of symbols for measurement (nrofSymbols), a periodicity and an offset for measurement (rssi-Periodicity AndOffset), a serving cell index (refServCellIndex) and the like are configured.

Similarly, Cross Link Interference Received Signal Received Power (CLI-RSRP) may be used to measure the cross link interference.

### (Problems)

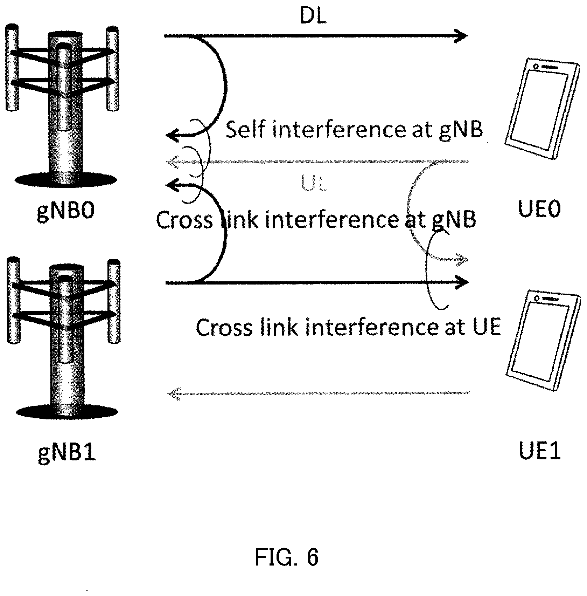

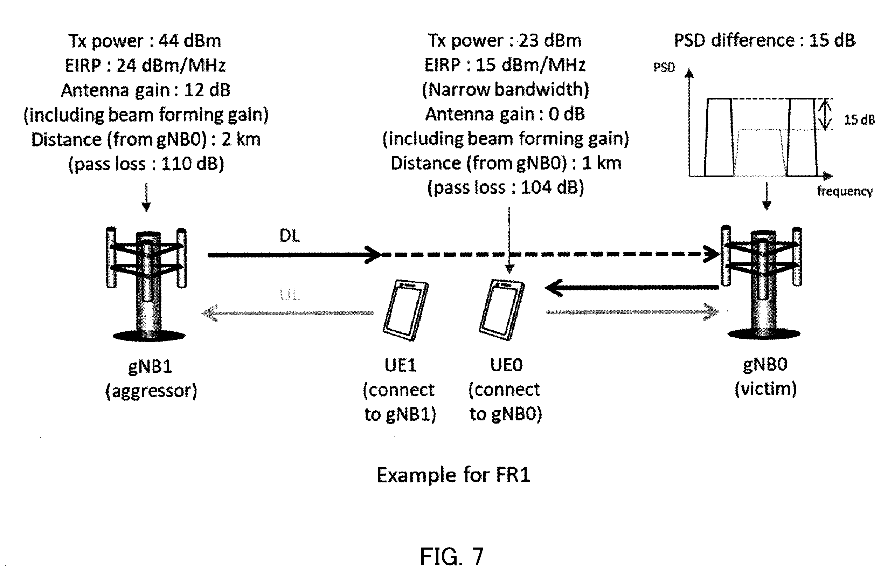

Three cases as follows may be envisaged for interference management.
i) Self-interference in a gNB (intra-gNB interference): For example, the intra-gNB interference is interference or others that is caused by DL from gNB0 to UE0 to UL from UE0 to gNB0, as illustrated in FIG. 6. The intra-gNB interference is addressed by configuration or implementation of a gNB.
ii) Cross link interference in gNBs (inter-gNB interference): For example, the inter-gNB interference is interference or others that is caused by DL from gNB 1 to UE 1 to UL from UE0 to gNB0, as illustrated in FIG. 6. In this case, gNB1 may be referred to as an interfering base station or an aggressor, and gNB0 may be referred to as an interfered base station or a victim. Similar to the example for FR1 as illustrated in FIG. 7, a power spectrum density (PSD) difference of about 15 dB is assumed. If the PSD difference of 15 dB is critical for the XDD operation, the inter-gNB interference must be addressed by CLI management.
iii) Cross link interference in UEs: For example, the cross link interference is interference or others that is caused by UL from UE0 to gNB0 to DL from gNB1 to UE1. For the cross link interference in the UEs, CLI-RSSI measurement and SRS-RSRP measurement in Rel-16 may be reused for the XDD operation or subband non-overlapping full duplex.

In the following embodiments, solutions for the inter-gNB interference are mainly focused on.

### (First Embodiment)

In first embodiment, CLI-RSSI measurement and/or CLI-RSRP measurement may be introduced as measurement functionalities for the next generation radio access network (NG-RAN) such as 5G, Beyond 5G and 6G. Specifically, a measurement window for CLI measurement is configured for an interfered base station to transmit a reference signal or a reference channel to an interfering base station. Accordingly, the interfered base station can measure the reference signal or the reference channel transmitted from the interfering base station so as to measure the cross link interference.

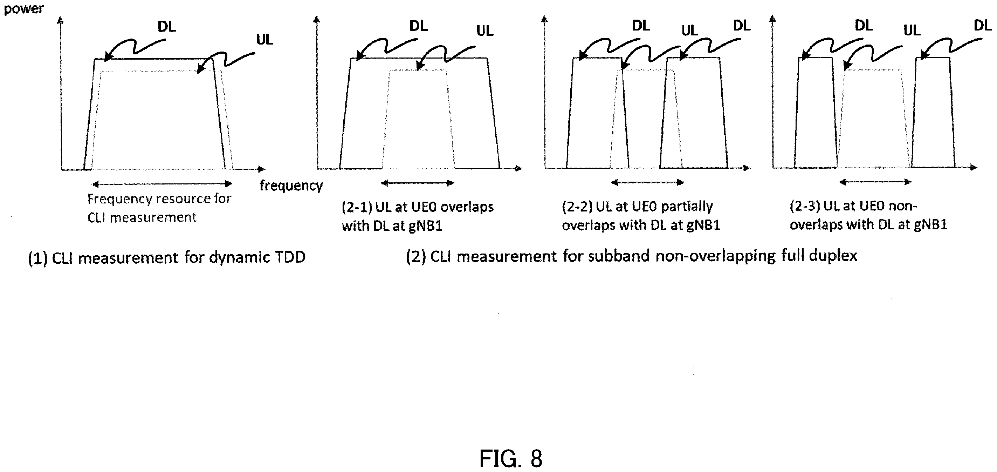

In Case (1) illustrated in FIG. 8, CLI measurement for dynamic TDD (Time Division Duplex) is illustrated. Frequency resources for CLI measurement at the interfered base station gNB0 are configured in an UL frequency band from UE0.

Cases (2-1), (2-2) and (2-3) illustrated in FIG. 8 are envisaged for CLI measurement in XDD or subband non-overlapping full duplex operation.

In Case (2-1), UL from UE0 completely overlaps with DL from the interfering base station gNB1. Frequency resources for CLI measurement at the interfered base station gNB0 are configured to an UL frequency band from UE0.

In Case (2-2), UL from UE0 partially overlaps with DL from the interfering base station gNB1. Frequency resources for CLI measurement at the interfered base station gNB0 are configured to an UL frequency band from UE0.

In Case (2-3), UL from UE0 does not overlap with DL from the interfering base station gNB1. Frequency resources for CLI measurement at the interfered base station gNB0 are configured to an UL frequency band from UE0.

In this manner, DL frequency resources (interfering channel) may not completely overlap with UL frequency resources (interfered channel or victim channel. CLI-RSSI measurement and/or CLI-RSRP measurement (which may be collectively referred to as CLI measurement) may be introduced into these cases.

In the first embodiment, a measurement window for CLI measurement may be configured to the interfered base station. The interfered base station may request the CLI measurement for a gNB-CU (Control Unit) or an upper node. Specifically, the interfered base station may configure the measurement window and request transmission of a reference signal or a reference channel for the interfering base station.

Here, the measurement window may include a reference signal/reference channel configuration, time resources, frequency resources, a cell ID of an interfering cell or an interfering base station, a serving cell index (ServCellIndex) of an interfering cell or an interfering base station, a subcarrier spacing (SCS), beam information or the like. Here, the frequency resources may be determined by the interfered base station. Also, the measurement window may include a guard gap.

Also, multiple measurement windows may be configured for different scenarios such as Cases (2-1), (2-2) and (2-3). For example, different measurement windows may be indicated or configured depending on the degree of overlapping of cross link as illustrated in Cases (2-1), (2-2) and (2-3).

According to the first embodiment, an interfered base station transmits a measurement request for cross link interference measurement (CLI measurement) to a gNB-CU or an upper node and in response to the measurement request, receives a cross link interference measurement configuration from the gNB-CU or the upper node. For example, the cross link interference measurement configuration may include a measurement window for measuring a reference channel transmitted from an interfering cell or an interfering base station. The interfered base station may perform CLI-RSSI measurement or CLI-RSRP measurement for the reference channel transmitted from the interfering cell or the interfering base station in accordance with the received cross link interference measurement configuration.

For example, the cross link interference measurement configuration may indicate or configure a measurement window. The measurement window may include one or more of a reference channel configuration, time resources, frequency resources, a cell ID of a transmitting cell of a reference channel, an index of a serving cell of a transmitting base station of a reference channel, a subcarrier spacing (SCS) and beam information. Here, the frequency resources may be selected by an interfered base station. Also, the measurement window may include a guard gap.

Also, the cross link interference measurement configuration may be configured depending on the degree of overlapping between an uplink and a downlink. Specifically, different cross link interference measurement configurations may be indicated or configured depending on the degree of overlapping such as (Case 2-1) complete overlapping, (Case 2-2) partial overlapping or (Case 2-3) non-overlapping between an uplink frequency band from a UE to an interfering base station and a downlink frequency band from an interfering base station to a UE.

In this manner, according to the first embodiment, the interfered base station can transmit a measurement request for the cross link interference measurement to detect occurrence of cross link interference properly.

### (Second Embodiment)

In the second embodiment, time division duplex (TDD) pattern information regarding a TDD pattern in the XDD operation may be exchanged between base stations. In other words, the TDD pattern information regarding a TDD pattern for a base station, such as a TDD pattern in a normal TDD operation, that is, in a non-XDD operation as well as the TDD pattern in an XDD operation, may be shared between base stations. Accordingly, the respective base stations can configure the TDD pattern suitable for reduction in cross link interference with reference to the TDD pattern for other base stations or cells.

In Rel-16, it is defined that the information regarding the TDD pattern is shared among gNBs. (See TS 38.401 7.3 Cross-Link Interference Management or the like, for example.) For example, a gNB-CU forwards the TDD pattern for an adjacent node to a connected gNB-DU (Distributed Unit), and the gNB-DU transmits its own TDD pattern to the gNB-CU.

For the XDD operation, additional information and configuration for configuring DL or UL in XDD resources may be introduced. For example, the additional information or configuration may be a new TDD pattern for XDD resources, an additional indication for XDD resources or the like. The additional information or configuration for XDD resources may be exchanged among gNBs.

Time domain information including TDD pattern information may be indicated or configured in response to a request, periodically, upon an event trigger, in a static, semi-static or dynamic manner. Also, indication or configuration manners of the time domain information may be switched appropriately.

According to the second embodiment, a base station may transmit the time domain information indicative of a TDD pattern for the XDD operation in its cell and receive the time domain information indicative of a TDD pattern for the XDD operation in cells of other base stations. Upon receiving the time domain information for cells of other base stations, the base station may store the time domain information of that base station and the time domain information of the other base stations and control the XDD operation in accordance with the TDD pattern suitable for reduction in cross link interference based on the time domain information of that base station and the time domain information of the other base stations.

In this manner, according to the second embodiment, each base station can share the time domain information for the XDD operation with other base stations and implement the XDD operation in accordance with the TDD pattern suitable for reduction in cross link interference.

### (Third Embodiment)

In the third embodiment, frequency domain information and/or spatial domain information for the XDD operation may be exchanged between base stations. In other words, in addition to or instead of the time domain information such as TDD pattern information for a base station, the frequency domain information and/or spatial domain information for the XDD operation may be shared among base stations. Accordingly, the respective base stations can configure a TDD pattern suitable for reduction in cross link interference with reference to the frequency domain information and/or the spatial domain information for other base stations or cells.

In addition to or instead of the time domain information, the frequency domain information for the XDD operation may be exchanged among gNBs. For example, the frequency domain information for the XDD operation may include DL and/or UL frequency resources for the XDD operation. Also, the frequency domain information for the XDD operation may include bandwidth part (BWP) information for DL and/or UL for the XDD operation. Also, the frequency domain information for the XDD operation may include information to indicate whether the XDD operation is being performed, for example. For example, if the XDD operation is not being performed, frequency resources may be completely available to DL.

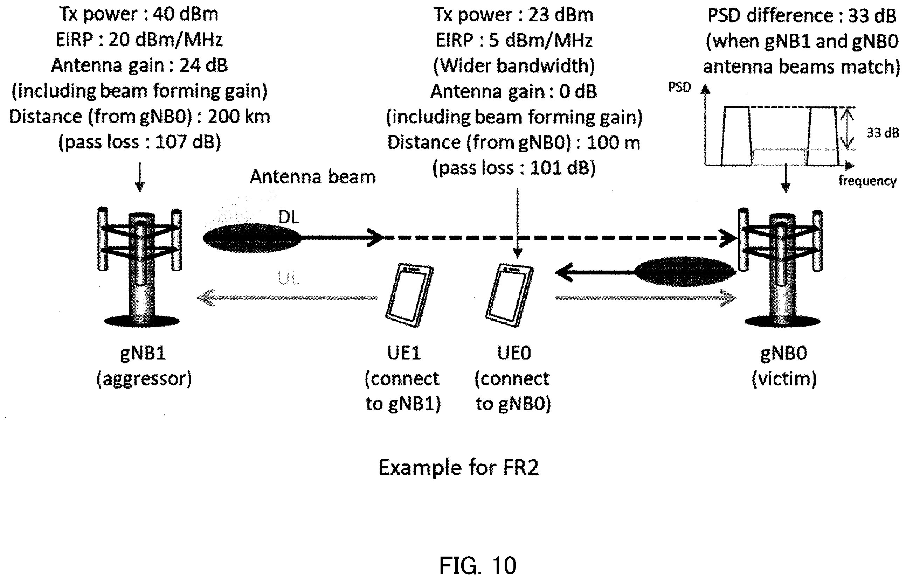

In addition to or instead of the time domain information and/or the frequency domain information, spatial domain information for the XDD operation may be exchanged between gNBs. For example, the spatial domain information for the XDD operation may include beam information. For example, for FR2 as illustrated in FIG. 10, the orientation of gNB antenna beams is very important for interference management. For example, if antenna beams of gNBs have the same orientation, higher interference may be predicted.

The frequency domain information and/or the spatial domain information may be indicated or configured in response to a request, periodically, upon an event trigger, in a static, semi-static or dynamic manner. Also, indication or configuration manners of the frequency domain information and/or the spatial domain information may be switched.

The time domain information, the frequency domain information and/or the spatial domain information may be indicated or configured in mutually different manners. For example, the time domain information may be semi-statically configured and the frequency domain information and the spatial domain information may be dynamically configured. Indication or configuration manners of the time domain information, the frequency domain information and/or the spatial domain information may be switched depending on change repetitions.

In this manner, according to the third embodiment, a base station may transmit one or both of the frequency domain information and the spatial domain information for the XDD operation of its cell and receive one or both the frequency domain information and the spatial domain information for the XDD operation of cells of other base stations. Upon receiving the frequency domain information and/or the spatial domain information for cells of other base stations, a base station may store the frequency domain information and/or the spatial domain information for that base station and the frequency domain information and/or the spatial domain information for other base stations and perform the XDD operation with frequency resources and/or beams suitable for reduction in cross link interference based on the frequency domain information and/or the spatial domain information for that base station and the frequency domain information and/or the spatial domain information for other base stations.

In this manner, according to the third embodiment, each base station can share the frequency domain information and/or the spatial domain information among other base stations and achieve the XDD operation with frequency resources and/or beams suitable for reduction in cross link interference.

### (Hardware Configuration)

Note that, the block diagrams used to describe the above embodiment illustrate blocks on the basis of functions. These functional blocks (components) are implemented by any combination of at least hardware or software items. Implementation manners of the functional blocks are not particularly limited. That is, the functional blocks may be implemented using one physically or logically coupled apparatus. Also, two or more physically or logically separate apparatuses may be directly or indirectly connected (for example, via wires or in the air), and the plurality of apparatuses may be used to implement the functional blocks. The functional blocks may be implemented by combining software items with the one apparatus or the plurality of apparatuses described above.

The functions may include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component) that functions to achieve transmission is referred to as "a transmitting unit" or "a transmitter". The implementation manners of the functions are not particularly limited as described above.

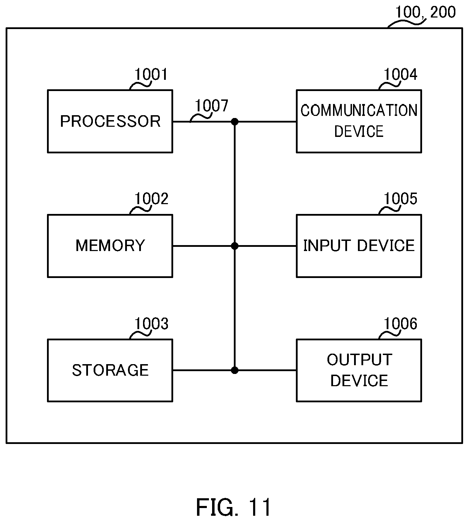

For example, a base station, a user terminal and the like according to one embodiment of the present disclosure may function as a computer that executes processing of radio communication methods of the present disclosure. FIG. 11 illustrates an exemplary hardware arrangement of the base station and the user terminal according to one embodiment of the present disclosure. The base station 10 and the user terminal 20 as stated above may be physically arranged as a computer device including a processor 1001, a memory 1002, a storage 1003, a communication device 1004, an input device 1005, an output device 1006, a bus 1007, and the like.

Note that the term "apparatus" in the following description can be replaced with a circuitry, a device, a unit, or the like. The hardware arrangements of the base station 10 and the user terminal 20 may include one or more of the devices illustrated in FIG. 11 or may not include a part of the devices.

The functions of the base station 10 and the user terminal 20 may be implemented by predetermined software items (programs) loaded into a hardware item, such as the processor 1001, the memory 1002, and the like, to cause the processor 1001 to perform an operation or control communication by the communication device 1004 or at least one of reading and writing of data from/in the memory 1002 and the storage 1003.

The processor 1001 executes an operating system to control the entire computer, for example. The processor 1001 may be composed of a central processing unit (CPU) including an interface with peripheral devices, a controller, an arithmetic device, a register, and the like. For example, the baseband signal processing unit 104, the call processing unit 105 and the like as described above may be implemented using the processor 1001.

Also, the processor 1001 loads a program (program code), a software module, data, and the like from at least one of the storage 1003 and the communication device 1004 to the memory 1002 and performs various types of processing in accordance with the program (program code), the software module, the data, and the like. As the program, a program for causing the computer to perform at least a part of the operations described in the above embodiments may be used. For example, the control unit 401 of the user terminal 20 may be implemented using a control program stored in the memory 1002 and executed by the processor 1001, and the other functional blocks may also be implemented similarly. While it has been described that the various types of processing as described above may be performed by the single processor 1001, the various types of processing may be performed by the two or more processors 1001 in parallel or sequentially. The processor 1001 may be implemented using one or more chips. Note that the program may be transmitted from a network through a telecommunication line.

The memory 1002 is a computer-readable storage medium and may be composed of, for example, at least one of a Read Only Memory (ROM), an Erasable Programmable ROM (EPROM), an Electrically Erasable Programmable ROM (EEPROM), and a Random Access Memory (RAM). The memory 1002 may be called as a register, a cache, a main memory (main storage device), or the like. The memory 1002 can save a program (program code), a software module, and the like that can be executed to perform a radio communication method according to one embodiment of the present disclosure.

The storage 1003 is a computer-readable storage medium and may be composed of, for example, at least one of an optical disk such as a Compact Disc ROM (CD-ROM), a hard disk drive, a flexible disk, a magnetooptical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may also be called as an auxiliary storage device. The storage medium as described above may be, for example, a database, a server, or other appropriate media including at least one of the memory 1002 and the storage 1003.

The communication device 1004 is hardware (transceiver device) for communication between computers through at least one of wired and wireless networks and is also called as, for example, a network device, a network controller, a network card, or a communication module. The communication device 1004 may be configured to include a high frequency switch, a duplexer, a filter, a frequency synthesizer, and the like in order to achieve at least one of Frequency Division Duplex (FDD) and Time Division Duplex (TDD), for example. For example, a transmission and reception antenna 101, an amplification unit 102, a transmission and reception unit 103, a channel interface 106 and the like as stated above may be implemented using the communication device 1004. The transmission and reception unit 103 may be implemented as being physically or logically separated into a transmission unit 103a and a reception unit 103b.

The input device 1005 is an input device (for example, a keyboard, a mouse, a microphone, a switch, a button, or a sensor) that receives inputs from the outside. The output device 1006 is an output device (for example, a display, a speaker, or an LED lamp) which feeds outputs to the outside. Note that the input device 1005 and the output device 1006 may be integrated (for example, a touch panel).

Also, the respective devices, such as the processor 1001, the memory 1002, and the like are connected by the bus 1007 for communication of information. The bus 1007 may be arranged using a single bus or using buses different between each pair of the devices.

Also, the base station 10 and the user terminal 20 may be arranged to include hardware items such as a microprocessor, a digital signal processor (DSP), an application specific integrated circuit (ASIC), a programmable logic device (PLD), a field programmable gate array (FPGA) and the like, and a portion or all of the respective functional blocks may be implemented by the hardware items. For example, the processor 1001 may be implemented using at least one of these hardware items.

Indication of information is not limited to the aspects or embodiments described in the present disclosure, and the information may be indicated in other manners. For example, information may be indicated or signaled by a physical layer signaling (for example, Downlink Control Information (DCI) and Uplink Control Information (UCI)), upper layer signaling (for example, Radio Resource Control (RRC) signaling, Medium Access Control (MAC) signaling, broadcast information (Master Information Block (MIB), and System Information Block (SIB))) or other signals or combinations thereof. Also, the RRC signaling may be referred to as an RRC message and may be, for example, an RRC connection setup message, an RRC connection reconfiguration message, or the like.

The aspects and embodiments described in the present disclosure may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark) or other appropriate systems and a next-generation system enhanced based on the above systems. Also, combinations of multiple systems (e.g., a combination of at least LTE or LTE-A and 5G) may be applied.

The orders of the processing procedures, the sequences, the flow charts, and the like of the aspects and embodiments described in the present disclosure may be changed as long as there is no contradiction. For example, for the methods described in the present disclosure, elements of various steps are presented in exemplary orders, but the methods are not limited to the presented specific orders.

In some cases, specific operations which are described in the present disclosure as being performed by a base station may be performed by an upper node. Various operations performed for communication with a terminal in a network constituted by one or more network nodes including the base station can be obviously performed by at least one of the base station and a network node other than the base station (for examples, an MME or a S-GW, but not limited to, may be conceived). Although the case where there is one network node in addition to the base station has been illustrated above, a plurality of other network nodes may be combined (for example, an MME and an S-GW).

Information and the like (the item "information and signaling" may be referred to) can be fed from a higher layer (or a lower layer) to a lower layer (or a higher layer). The information and the like may be fed in or out through a plurality of network nodes.

Input and output information and the like may be saved in a specific place (for example, a memory) or may be managed using a management table. The input and output information and the like can be overwritten, updated, or additionally written. The output information and the like may be deleted. The input information and the like may be transmitted to another apparatus.

Determination may be made based on a value represented by one bit (0 or 1), based on a Boolean value (true or false), or based on comparison with a numerical value (for example, comparison with a predetermined value).

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, if the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

The information, the signals, and the like described in the present disclosure may be represented by using any of various different techniques. For example, data, instructions, commands, information, signals, bits, symbols, chips, and the like that may be mentioned throughout the above description may be represented by voltage, current, electromagnetic waves, magnetic fields, magnetic particles, optical fields or photons or arbitrary combinations thereof.

Note that terminologies described in the present disclosure and terminologies necessary to understand the present disclosure may be replaced with those having the same or similar meaning. For example, at least one of channels and symbols may be a signal (signaling). The signal may be a message. Also, a component carrier (CC) may be called a carrier frequency, a cell, a frequency carrier, or the like.

The terms "system" and "network" used in the present disclosure can be interchangeably used.

Information, parameters, and the like described in the present disclosure may be represented using an absolute value, using a value relative to a predetermined value, or using other corresponding information. For example, radio resources may be indicated by indices.

The names used for the above-stated parameters are not limitative in any respect. Furthermore, the numerical formulas and the like using the parameters may be different from the ones explicitly disclosed in the present disclosure. Various channels (for example, a PUCCH and a PDCCH) and information elements can be identified by any suitable names, and various names assigned to these various channels and information elements are not limitative in any respect.

In the present disclosure, the terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably. The base station may be referred to as a macro cell, a small cell, a femtocell, a pico cell or the like.

The base station can accommodate one or more (for example, three) cells. If the base station accommodates a plurality of cells, the entire coverage area of the base station can be divided into a plurality of smaller areas, and each of the smaller areas can provide a communication service based on a base station subsystem (for example, a remote radio head (RRH) serving as an indoor small base station). The term "cell" or "sector" denotes a part or all of the coverage area of at least one of the base station and the base station subsystem that perform a communication service in the coverage.

In the present disclosure, transmission of information from a base station to a terminal may be replaced with instructions of control and operation from the base station to the terminal based on the information.

In the present disclosure, the terms "Mobile Station (MS)", "user terminal", "User Equipment (UE)", "terminal" and the like may be used interchangeably.

The mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terminologies.

At least one of a base station and a mobile station may be referred to as a transmitter, a receiver, a communication apparatus, or the like. Note that at least one of the base station and the mobile station may be a device mounted in a mobility, the mobility itself, or the like. The mobility may be, but not limited to, a vehicle, a transport vehicle, an automobile, a motorcycles, a bicycle, a connected car, an excavator, a bulldozer, a wheel loader, a dump truck, a forklift, a train, a bus, a rear carriage, a rickshaw, a ship (ship and other watercraft), an aircraft, a rocket, a satellite, a drone (registered trademark), a multicopter, a quadcopter, a balloon, and articles mounted thereon. The mobility may also be a mobile entity that runs autonomously based on operational commands. It may be a vehicle (e.g., car, airplane, etc.), an unmanned moving vehicle (e.g., drone, self-driving car, etc.), or a robot (manned or unmanned). Note that at least one of the base station and the mobile station may also include an apparatus that does not necessarily move during communication operation. For example, at least one of the base station and the mobile station may be an Internet-of-Things (IoT) equipment such as a sensor.

Also, the base station in the present disclosure may be interchanged with the user terminal. For example, the aspects and the embodiments of the present disclosure may be applied to an arrangement where communications between the base station and the user terminal is replaced with communications between multiple user terminals (for example, such communication may be referred to as device-to-device (D2D), vehicle-to-everything (V2X), or the like). In this case, the terminal 20 may be configured to have the same functionalities as those of the above-stated base station 10. Also, the wordings "uplink" and "downlink" may be replaced with corresponding wordings for inter-terminal communication (for example, "side"). For example, an uplink channel, a downlink channel, and the like may be replaced with a side channel.

Similarly, a terminal in the present disclosure may be replaced with a base station. In this case, the base station 10 is configured to have the same functionalities as those of the above-stated user terminal 20.

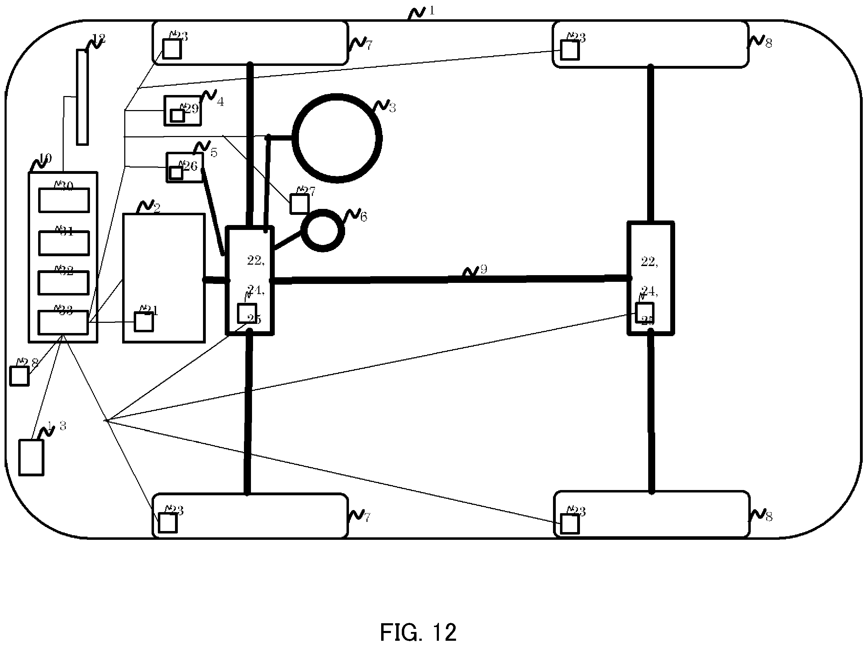

FIG. 12 illustrates an exemplary arrangement of a vehicle 1. As illustrated in FIG. 12, the vehicle 1 includes a driving unit 2, a steering unit 3, an accelerator pedal 4, a brake pedal 5, a shift lever 6, front wheels 7, rear wheels 8, an axle 9, an electronic controller 10, various sensors 21 to 29, an information service unit 12 and a communication module 13.

The driving unit 2 may be composed of an engine, a motor or a hybrid of the engine and the motor, for example.

The steering unit 3 may at least include a steering wheel (which is also called a handle) and be arranged to steer at least one of the front wheels and the rear wheels based on user's operation of the steering wheel.

The electronic controller 10 is composed of a microprocessor 31, a memory (ROM, RAM) 32 and a communication port (IO port) 33. Signals from the various sensors 21 to 27 incorporated in the vehicle are fed to the electronic controller 10. The electronic controller 10 may be referred to as an ECU (Electronic Control Unit).

The signals fed from the various sensors 21 to 28 may include a current signal from a current sensor 21 for sensing the current of a motor, an engine speed signal for the front or rear wheels obtained with an engine speed sensor 22, an air pressure signal for front or rear wheels obtained with an air pressure sensor 23, a vehicle speed signal obtained with a vehicle speed sensor 24, an acceleration signal obtained with an acceleration sensor 25, a stepping-in amount signal of an accelerator pedal obtained with an accelerator pedal sensor 29, a stepping-in amount signal of a brake pedal obtained with a brake pedal sensor 26, an operating signal of a shift lever obtained with a shift lever sensor 27, and a detection signal for detecting an obstacle, a vehicle, a pedestrian and the like obtained with an object detection sensor 28.

The information service unit 12 may be composed of various equipments for providing various information items such as driving information, traffic information, entertainment information, for example, a car navigation system, an audio system, a speaker, a television set and a radio set, and one or more ECUs for controlling these equipments. The information service unit 12 may use information obtained from an external device via the communication module 13 and the like to provide various multimedia information items and multimedia services to an occupant in the vehicle 1.

The information service unit 12 may include input devices for receiving inputs from external devices (for example, a keyboard, a mouse, a microphone, a switch, a button, a sensor, a touch panel and the like) and output devices for outputting to external devices (for example, a display, a speaker, a LED lump, a touch panel and the like).

A driving assistance system unit 30 may be composed of various equipments for providing functionalities for preventing an accident before it happens or reducing driving load of a driver, for example, a millimeter-wave radar, a LiDAR (Light Detection and Ranging), a camera, a positioning locator (for example, a GNSS or the like), map information (for example, a high definition (HD) map, an autonomous vehicle (AV) map and the like), a gyro system (for example, an IMU (inertial Measurement Unit), an INS (Inertial Navigation System) and the like), an AI (Artificial Intelligence) chip, and an AI processor, and one or more ECUs for controlling these equipments. Also, the driving assistance system unit 30 may transmit and receive various information items via the communication module 13 to implement a driving assistance functionality and an autonomous driving functionality.

The communication module 13 may communicate with the microprocessor 31 and components in the vehicle 1 via a communication port. For example, the communication module 13 transmits and receives data to and from the driving unit 2, the steering unit 3, the accelerator pedal 4, the brake pedal 5, the shift lever 6, the front wheels 7, the rear wheels 8 and the axle 9 provided in the vehicle 1, the microprocessor 31 and the memory (ROM, RAM) 32 in the electronic controller 10 and the sensors 21 to 28.

The communication module 13 is a communication device that can be controlled by the microprocessor 31 in the electronic controller 10 and communicate with an external device. For example, the communication module 13 may transmit and receive various information items to and from the external device in the air. The communication module 13 may be inside or outside the electronic controller 10. The external device may be a base station, a mobile station and the like, for example.

The communication module 13 may transmit at least one of signals from the above-stated various sensors 21-28 incoming into the electronic controller 10, information obtained based on the signals and information incoming from an external one (user) via the information service unit 12 to external devices via radio communication. The electronic controller 10, the various sensors 21-28, the information service unit 12 and the like may be referred to as an input unit for accepting inputs. For example, a PUSCH transmitted by the communication module 13 may include the information based on the above-stated inputs.

The communication module 13 receives various types of information (traffic information, traffic light information, vehicle distance information and others) and displays the information items to the information service unit 12 installed into the vehicle 1. The information service unit 12 may be referred to as an output unit for outputting information (feeding information to devices such as a display, a speaker and the like based on a PDSCH (or data/information decoded from the PDSCH) received at the communication module 13).

The communication module 13 stores various types of information received from an external device in the memory 32 available to the microprocessor 31. The driving unit 2, the steering unit 3, the accelerator pedal 4, the brake pedal 5, the shift lever 6, the front wheels 7, the rear wheels 8, the axle 9, the sensors 21-28 and others mounted in the vehicle 1 may be controlled by the microprocessor 31 based on the information items stored in the memory 32.

### (Summary of Embodiments)

As stated above, according to one aspect of the present disclosure, there is provided a base station including a transmitter that transmits a measurement request for cross link interference measurement, and a controller that measures a reference channel in accordance with the cross link interference measurement configuration received in response to the measurement request.

According to this arrangement, the base station can transmit a measurement request for cross link interference measurement and detect occurrence of cross link interference properly.

In one embodiment, the controller may perform CLI-RSSI (Cross Link Interference-Received Signal Strength Indicator) measurement or CLI-RSRP (Cross Link Interference-Received Signal Received Power) measurement for the reference channel in accordance with the cross link interference measurement configuration. According to this embodiment, cross link interference can be measured by the CLI-RSSI measurement and/or the CLI-RSRP measurement.

In one embodiment, the cross link interference measurement configuration may include one or more of a reference channel configuration, time resources, frequency resources, a cell ID, a serving cell index, a subcarrier spacing (SCS) and beam information. According to this embodiment, the cross link interference measurement can be properly performed.

In one embodiment, the cross link interference measurement configuration may be configured depending on a degree of overlapping between an uplink and a downlink. According to this embodiment, the cross link interference measurement can be properly performed.

Also, according to one aspect of the present disclosure, there is provided a base station implemented radio communication method including transmitting a measurement request for cross link interference measurement, and measuring a reference channel in accordance with the cross link interference measurement configuration received in response to the measurement request.

According to this arrangement, the base station can transmit a measurement request for cross link interference measurement and detect occurrence of cross link interference properly.

Also, according to one aspect of the present disclosure, there is provided a base station including a transmitter that transmits at least one of time domain information, frequency domain information and spatial domain information for an XDD (Cross Division Duplex) operation for a cell of the base station, and receiving at least one of time domain information, frequency domain information and spatial domain information for an XDD operation for cells of other base stations.

According to the above arrangement, the time domain information, the frequency domain information and/or the spatial domain information for the XDD operation can be shared with other base stations, and the XDD operation suitable for reduction in cross link interference can be achieved.

In one embodiment, the time domain information may indicate a TDD pattern for the XDD operation. According to this embodiment, the XDD operation can be achieved by the TDD pattern suitable for reduction in cross link interference.

In one embodiment, the frequency domain information may indicate frequency resources or a bandwidth part for a downlink and an uplink in the XDD operation. According to this embodiment, the XDD operation can be achieved by the frequency resources suitable for reduction in cross link interference.

In one embodiment, the spatial domain information may indicate beam information for the XDD operation. According to this embodiment, the XDD operation can be achieved by beams suitable for reduction in cross link interference.

Also, according to one aspect of the present disclosure, there is provided a base station implemented radio communication method including transmitting at least one of time domain information, frequency domain information and spatial domain information for an XDD (Cross Division Duplex) operation for a cell of the base station, and a receiver that receives at least one of time domain information, frequency domain information and spatial domain information for an XDD operation for cells of other base stations.

According to the above arrangement, the time domain information, the frequency domain information and/or the spatial domain information for the XDD operation can be shared with other base stations, and the XDD operation suitable for reduction in cross link interference can be achieved.

### (Supplement of Embodiments)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any derivatives of the terms mean any direct or indirect connection and coupling between two or more elements, and the terms can include cases in which one or more intermediate elements exist between two "connected" or "coupled" elements. The coupling or the connection between elements may be a physical or logical coupling or connection or may be a combination of the physical and logical couplings or connections. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

A reference signal can also be abbreviated as an RS and may also be called as a pilot depending on the applied standard.

The recitation "based on" used in the present disclosure does not mean "based only on", unless otherwise specified. In other words, the recitation "based on" means both of "based only on" and "based at least on".

Any reference to elements by using the terms "first", "second", and the like that are used in the present disclosure does not generally limit the quantities of or the order of these elements. These terms can be used in the present disclosure as a convenient manner of distinguishing between two or more elements. Therefore, reference to first and second elements does not mean that only the two elements can be employed, or that the first element has to precede the second element somehow.

The "means" in the arrangements of the above respective apparatuses may be replaced with "unit", "circuitry", "device", or the like.

In cases where terms "include", "including", and their derivatives are used in the present disclosure, these terms are intended to be inclusive like the term "comprising". Further, the term "or" used in the present disclosure is not intended to be an exclusive OR.

A radio frame may be constituted by one or more frames in the time domain. The one frame or each of the plurality of frames may be referred to as a subframe in the time domain. The subframe may be further constituted by one or more slots in the time domain. The subframe may have a fixed time length (e.g., 1 ms) independent of numerology.

The numerology may be a communication parameter that is applied to at least one of transmission and reception of a certain signal or channel. For example, the numerology may indicate at least one of SubCarrier Spacing (SCS), a bandwidth, a symbol length, a cyclic prefix length, a Transmission Time Interval (TTI), the number of symbols per TTI, a radio frame arrangement, a specific filtering processing that is performed by a transceiver in the frequency domain, a specific windowing processing that is performed by the transceiver in the time domain, and the like.

The slot may be constituted by one or more symbols (e.g., an Orthogonal Frequency Division Multiplexing (OFDM) symbol, a Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit longer than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be referred to as other corresponding names.

For example, one subframe, a plurality of continuous subframes, one slot, or one mini-slot may be referred to as a Transmission Time Interval (TTI). Namely, at least one of the subframe and the TTI may be a subframe (1 ms) in the existing LTE or have a duration (for example, 1 to 13 symbols) shorter than 1 ms or a duration longer than 1 ms. Note that a unit that represents the TTI may be referred to as a slot, a mini-slot, or the like instead of a subframe.

Here, the TTI, for example, refers to a minimum time unit for scheduling in radio communication. For example, in an LTE system, an IAB node performs scheduling for allocating a radio resource (a frequency bandwidth, a transmit power, and the like that are available to each user terminal) on the unit of TTI to each user terminal. Note that the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in the case where one slot or one mini-slot is referred to as the TTI, one or more TTIs (that is, one or more slots, or one or more mini-slots) may be a minimum time unit for the scheduling. Furthermore, the number of slots (the number of mini-slots) that compose the minimum time unit for the scheduling may be controlled.

A TTI having a time length of 1 ms may be referred to as a regular TTI (a TTI in LTE Rel. 8 to LTE Rel. 12), a normal TTI, a long TTI, a regular subframe, a normal subframe, a long subframe, a slot, or the like. A TTI shorter than the regular TTI may be referred to as a shortened TTI, a short TTI, a partial TTI (or a fractional TTI), a shortened subframe, a short subframe, a mini-slot, a subslot, a slot, or the like.

Note that the long TTI (for example, the regular TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one or more symbols in the time domain, and may have a length of one slot, one mini slot, one subframe, or one TTI. One TTI and one subframe may be constituted by one or more resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region of one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. A terminal may be configured with one or more BWPs within one carrier.

At least one of the configured BWPs may be active, and the terminal does not have to assume transmission/reception of a predetermined signal or channel outside the active BWP. Note that "cell", "carrier", and the like in the present disclosure may be replaced with "BWP".

Structures of the radio frame, the subframe, the slot, the mini-slot, the symbol, and the like as described above are merely illustrative. For example, the arrangement such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

The term "maximum transmit power" as described in the present disclosure may mean the maximum value of transmit power, the nominal UE maximum transmit power or the rated UE maximum transmit power.

In cases where articles, such as "a", "an", and "the" in English, for example, are added in the present disclosure by translation, nouns following these articles may have the same meaning as used in the plural.

The expression "A differs from B" may mean "A mutually differs from B" in the present disclosure. Note that the expression may mean "A and B each differs from C." The terminologies "separate", "couple" or the like may be interpreted similar to "differ".

### Reference Symbols List

- 10: Radio communication system
- 100: Base station (gNB)
- 200: Terminal (UE)

## Claims

1. A base station, comprising:
a transmitter that transmits a measurement request for cross link interference measurement; and
a controller that measures a reference channel in accordance with a cross link interference measurement configuration received in response to the measurement request.

2. The base station as claimed in claim 1, wherein the controller performs CLI-RSSI (Cross Link Interference-Received Signal Strength Indicator) measurement or CLI-RSRP (Cross Link Interference-Received Signal Received Power) measurement for the reference channel in accordance with the cross link interference measurement configuration.

3. The base station as claimed in claim 1, wherein the cross link interference measurement configuration includes one or more of a reference channel configuration, time resources, frequency resources, a cell ID, a serving cell index, a subcarrier spacing (SCS), and beam information.

4. The base station as claimed in claim 1, wherein the cross link interference measurement configuration is configured depending on a degree of overlapping between an uplink and a downlink.

5. A base station implemented radio communication method, comprising:
transmitting a measurement request for cross link interference measurement; and
measuring a reference channel in accordance with the cross link interference measurement configuration received in response to the measurement request.
